(19) Europäisches Patentamt

European Patent Office

Office européen des brevets

(11) **EP 4 756 370 A1**

(12) **EUROPEAN PATENT APPLICATION**
published in accordance with Art. 153(4) EPC

(43) Date of publication:
**10.06.2026 Bulletin 2026/24**

(21) Application number: **23947289.7**

(22) Date of filing: **18.10.2023**

(51) International Patent Classification (IPC):
*G01C 15/00* (2006.01)   *G01C 15/08* (2006.01)
*G01S 19/47* (2010.01)   *G01B 11/00* (2006.01)
*G01S 19/43* (2010.01)

(86) International application number:
**PCT/CN2023/125175**

(87) International publication number:
**WO 2025/025350 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2023 CN 202310948768**

(71) Applicants:
• **Qinnav Technology Ltd.**
**Jiading District**
**Shanghai 201801 (CN)**

• **Comnav Technology Ltd.**
**Shanghai 201801 (CN)**

(72) Inventors:
• **WANG, Yunpeng**
**Shanghai 201801 (CN)**
• **FENG, Yi**
**Shanghai 201801 (CN)**
• **ZHANG, Meng**
**Shanghai 201801 (CN)**
• **ZHANG, Lu**
**Shanghai 201801 (CN)**

(74) Representative: **De Vries & Metman**
**Overschiestraat 180**
**1062 XK Amsterdam (NL)**

(54) **SETTING-OUT METHOD, MEASUREMENT SYSTEM, AND COMPUTER READABLE MEDIUM**

(57)      A setting-out method, a measurement system (500), and a computer readable medium. The setting-out method is used for the measurement system (500). The measurement system (500) comprises a navigation module (1, 501), a laser ranging module (2, 502), and a centering rod (6, 503). The navigation module (1, 501) comprises an inertial measuring unit and a GNSS positioning unit. The setting-out method comprises: acquiring projection coordinates of a position vector of an antenna phase center in a first coordinate system by means of a GNSS positioning unit; acquiring distance information between a laser emission point and a laser irradiation point; on the basis of the projection coordinates and the distance information, calculating projection coordinates of the laser emission point in the first coordinate system and projection coordinates of the laser irradiation point in the first coordinate system; further calculating a corresponding setting-out error; and adjusting the centering rod (6, 503) on the basis of the setting-out error.

FIG. 1

**Description**

**TECHNICAL FIELD**

The embodiments of the present disclosure relate to a stakeout method, A measurement system and a computer-readable medium.

**BACKGROUND**

Engineering stakeout refers to the process of locating known points from design drawings or a point database in the actual environment by using certain measuring equipment and methods. Currently, in engineering stakeout, the common method involves a measurement operator manually holding a high-precision inertial navigation RTK (Real-time kinematic) receiver device, a field book, and a centering rod to search for the point position. The stakeout method requires the measurement operator to search around the stakeout point continuously, and the stakeout process is not intuitive enough. Moreover, in some special terrains, the centering rod cannot be fixed for position sampling, and the work efficiency is extremely low.

**SUMMARY**

The present disclosure aims to provide a stakeout method, a measurement system, and a computer-readable medium. By combining a laser distance measuring module with a centering rod, long-distance non-contact stakeout is implemented while simplifying the stakeout steps, and stable laser stakeout can be implemented via the centering rod.
At least one embodiment of the present disclosure provides a stakeout method for a measurement system. The measurement system includes a navigation module, a laser distance measuring module, and a support portion. The navigation module includes an inertial measuring unit and a GNSS positioning unit. The method includes: obtaining a projection coordinate $r_I^n$ of a position vector of an antenna phase center in the first coordinate system via the GNSS positioning unit; obtaining distance information between a laser emission point and a laser irradiation point; calculating a projection coordinate S of the laser emission point in the first coordinate system based on the projection coordinate $r_I^n$; calculating a projection coordinate M of the laser irradiation point in the first coordinate system based on the projection coordinate S and the distance information; calculating a corresponding stakeout error based on the projection coordinate S, the projection coordinate M, and a projection coordinate P of a point to be staked out in the first coordinate system; and performing a stakeout operation using the support portion according to the stakeout error so as to project the laser irradiation point onto the point to be staked out.
The stakeout method provided in at least one embodiment of the present disclosure further includes: initializing the navigation module to obtain an initial value of a heading angle of the measurement system.
In the stakeout method provided in at least one embodiment of the present disclosure, the step of calculating the projection coordinate S of the laser emission point in the first coordinate system based on the projection coordinate $r_I^n$ includes: obtaining a projection coordinate $l_S^b$ of a vector from the antenna phase center to the laser emission point in a second coordinate system; calculating the projection coordinate S according to the following formula: $\boldsymbol{S} = \boldsymbol{r}_I^n + \boldsymbol{C}_b^n \boldsymbol{l}_S^b$. Here, $\boldsymbol{C}_b^n$ represents a coordinate transformation matrix from the first coordinate system to the second coordinate system; an origin of the first coordinate system is located at a center of the inertial measuring unit, an x-axis is parallel to a local horizontal plane and pointing to geographic north, a y-axis is parallel to the local horizontal plane and pointing to geographic east, and a z-axis, the x-axis and the y-axis form a right-handed coordinate system; an origin of the second coordinate system is located at the center of the inertial measuring unit, an x-axis is perpendicular to a panel of the measurement system and pointing inward, a y-axis is perpendicular to the x-axis and pointing to a right side of the measurement system, and the z-axis, the x-axis and the y-axis form a right-handed coordinate system.
In the stakeout method provided in at least one embodiment of the present disclosure, the step of calculating the projection coordinate M of the laser irradiation point in the first coordinate system based on the projection coordinate S and the distance information includes: based on the distance information, calculating a projection coordinate $P_M^b$ of the laser irradiation point as the second coordinate in the second coordinate system according to the following formula: $P_M^b = T_L^b P_M^L$. Here, $P_M^L$ represents a projection coordinate of the laser irradiation point in a laser coordinate system, and $T_L^b$ represents a spatial position relationship between the second coordinate system and the laser coordinate system; an origin of the laser coordinate system is the laser emission point, a y-axis of the laser coordinate system is a projection of a coordinate vector from the laser emission point to the laser irradiation point onto the local horizontal plane, and an x-axis and the y-axis form a right-handed coordinate system; calculating the projection coordinate M according to the following formula: $M = S + C_b^n P_M^b$. Here, $C_b^n$ represents the coordinate transformation matrix from the first coordinate system to the second coordinate system.

In the stakeout method provided in at least one embodiment of the present disclosure, the stakeout error includes a first stakeout error and a second stakeout error, and the step of calculating the corresponding stakeout error based on the projection coordinate S, the projection coordinate M, and the position information of the point to be staked out includes: calculating a heading angle φ1 of a projection coordinate $\overrightarrow{MP}$ based on the projection coordinate M and the projection coordinate P; calculating a heading angle φ2 of a laser ray direction based on the projection coordinate S and the projection coordinate M; establishing a user perspective coordinate system, and calculating the first stakeout error and the second stakeout error based on the heading angle φ1 and the heading angle φ2 in the user perspective coordinate system, wherein an origin of the user perspective coordinate system is the laser irradiation point, an x-axis whose positive direction coincides with the laser ray direction, and a y-axis perpendicular to the x-axis to form a right-handed coordinate system.

In the stakeout method provided in at least one embodiment of the present disclosure, the stakeout error includes a rotation angle and a shake angle of the measurement system, and the step of calculating the corresponding stakeout error based on the projection coordinate S, the projection coordinate M, and projection coordinate P of the point to be staked out in the first coordinate system includes: calculating a heading angle φ1 of a vector *MP* based on the projection coordinate M and the projection coordinate P; calculating a heading angle φ2 of a laser ray direction based on the projection coordinate S and the projection coordinate M; calculating the rotation angle of the measurement system according to the following formula: $\Delta\varphi = \varphi_1 - \varphi_2$; calculating an included angle $\alpha_1$ between the projection coordinate P and a horizontal plane of the first coordinate system; calculating an included angle $\alpha_2$ between the projection coordinate M and the horizontal plane of the first coordinate system; calculating the shake angle of the measurement system according to the following formula: $\Delta\alpha = \alpha_1 - \alpha_2$.

In the stakeout method provided in at least one embodiment of the present disclosure, the step of calculating the heading angle φ1 of the vector *MP* based on the projection coordinate M and the projection coordinate P includes:

calculating the heading angle φ1 according to the following formula: $\varphi_1 = arctan2\left(\dfrac{P_E - M_E}{P_N - M_N}\right)$. The step of calculating the heading angle φ2 of the laser ray direction based on the projection coordinate S and the projection coordinate M includes: calculating the heading angle φ2 according to the following formula:

$$\varphi_2 = arctan2\left(\frac{M_E - S_E}{M_N - S_N}\right)$$. Here, a subscript E represents an east component in the first coordinate system, and a subscript N represents a north component in the first coordinate system.

In the stakeout method provided in at least one embodiment of the present disclosure, the step of calculating the first stakeout error and the second stakeout error in the user perspective coordinate system includes: calculating the first stakeout error according to the following formula: $\Delta F = \overrightarrow{MP} \cdot cos\left(\varphi_1 - \varphi_2\right)$; calculating the second stakeout error according to the following formula: $\Delta R = \overrightarrow{MP} \cdot sin\left(\varphi_1 - \varphi_2\right)$.

In the stakeout method provided in at least one embodiment of the present disclosure, the step of calculating the included angle $\alpha_1$ between the coordinate P and a horizontal plane of the first coordinate system includes: calculating the

included angle $\alpha_1$ according to the following formula: $\alpha_1 = arctan\left(P_U, \sqrt{P_E^2 + P_N^2}\right)$. The step of calculating an

included angle $\alpha_2$ between the projection coordinate M and the horizontal plane of the first coordinate system includes:

calculating the included angle $\alpha_2$ according to the following formula: $\alpha_2 = arctan\left(M_U, \sqrt{M_E^2 + M_N^2}\right)$.

Here, a subscript E represents an east component in the first coordinate system, a subscript N represents a north component in the first coordinate system, and a subscript U represents an elevation coordinate component in the first coordinate system.

The stakeout method provided in at least one embodiment of the present disclosure further includes: prompting a measurement operator to move to another side of an obstacle to perform a stakeout operation in a case where the obstacle blocks during a stakeout process.

At least one embodiment of the present disclosure further provides a measurement system configured to implement a stakeout method provided by at least one embodiment of the present disclosure. The measurement system includes a navigation module, a laser distance measuring module, a support portion, and a calculation module. The calculation module is configured to calculate the projection coordinate S of the laser emission point in the first coordinate system based on the projection coordinate $r_I^n$ and the distance information; calculate the projection coordinate M of the laser irradiation point in the first coordinate system based on the projection coordinate S and the distance information; and calculate a corresponding stakeout error based on the projection coordinate S, the projection coordinate M, and the projection coordinate P of a point to be staked out in the first coordinate system.

At least one embodiment of the present disclosure further provides a computer-readable medium storing executable instructions. When the instructions are executed by one or more processors, the following steps of the method according to at least one embodiment of the present disclosure are performed: calculating the projection coordinate S of the laser emission point in the first coordinate system based on the projection coordinate $r_I^n$; calculating the projection coordinate M of the laser irradiation point in the first coordinate system based on the projection coordinate S and the distance information; and calculating a corresponding stakeout error based on the projection coordinate S, the projection coordinate M, and the projection coordinate P of a point to be staked out in the first coordinate system.

It should be understood that the above general description and the following detailed description are merely exemplary and explanatory, and do not limit the present disclosure.

The stakeout method, the measurement system and the computer-readable medium of the present disclosure provide the following beneficial effects:

The stakeout method combines the laser distance measuring module with a centering rod, enabling long-distance non-contact stakeout without requiring the user to constantly move around and search. The laser can be prevented from shaking merely by keeping the centering rod stable.

BRIEF DESCRIPTION OF THE DRAWINGS

By reading the following detailed description of non-limiting embodiments with reference to the accompanying drawings, other features, objectives, and advantages of the present disclosure will become more apparent.

FIG. 1 is a schematic flowchart of a stakeout method provided in at least one embodiment of the present disclosure.
FIG. 2 is a schematic diagram of the measurement system provided in at least one embodiment of the present disclosure.
FIG. 3 shows a schematic diagram of laser stakeout.
FIG. 4 shows a schematic diagram of a situation in which an obstacle blocks during the stakeout process.
FIG. 5 shows a schematic block diagram of a measurement system provided in at least one embodiment of the present disclosure.

DETAILED DESCRIPTION

In order to make objectives, technical details and advantages of the embodiments of the present disclosure apparent, the technical solutions of the embodiment will be described in a clear and fully understandable way in connection with the drawings related to the embodiments of the present disclosure. It is obvious that the embodiments described are just a part but not all of the embodiments of the present disclosure. Based on the embodiments described herein, other embodiment(s) which can be acquired by those ordinarily skilled in the art without any inventive labor should be within the scope of the present disclosure.

Unless otherwise defined, the technical or scientific terms used in this present disclosure shall have the meanings generally understood by a person of ordinary skill in the relevant field. The terms "first", "second" and similar expressions used herein do not indicate any order, quantity, or importance, but are merely used to distinguish different components. Similarly, terms such as "a", "an" or "the" do not imply a limitation in quantity but rather indicate the presence of at least one. The terms "comprise", "include" and similar expressions are intended to mean that the elements or objects listed before such terms encompass those listed after them and their equivalents, without excluding other elements or objects. The terms "connect" or "couple" and similar expressions are not limited to physical or mechanical connections but may also include electrical connections, whether direct or indirect.

To solve the above technical problems, at least one embodiment of the present disclosure provides a stakeout method for a measurement system. The measurement system includes a navigation module, a laser distance measuring module, and a support portion. In the embodiments, the support portion is taken as a centering rod as an example. The navigation module includes an inertial measuring unit and a GNSS positioning unit. The method includes: obtaining the projection coordinate $r_I^n$ of the position vector of the antenna phase center in the first coordinate system via the GNSS positioning unit; obtaining the distance information between the laser emission point and the laser irradiation point; calculating the projection coordinate S of the laser emission point in the first coordinate system based on the projection coordinate $r_I^n$; calculating the projection coordinate M of the laser irradiation point in the first coordinate system based on the projection coordinate S and the distance information; calculating the corresponding stakeout error based on the projection coordinate S, the projection coordinate M, and a projection coordinate P of a point to be staked out in the first coordinate system; and performing the stakeout operation using the support portion according to the stakeout error so as to project the laser irradiation point onto the point to be staked out.

The stakeout method provided in embodiments of the present disclosure combines the laser distance measuring module with the centering rod, enabling the working radius of the measurement system to reach tens of meters. The user can achieve long-distance non-contact stakeout without continuously moving and searching. The laser can be prevented from shaking merely by keeping the centering rod stable.

At least one embodiment of the present disclosure further provides a measurement system configured to implement the above stakeout method.

The embodiments of the present disclosure are described in detail below with reference to the accompanying drawings. However, the present disclosure is not limited to these specific embodiments.

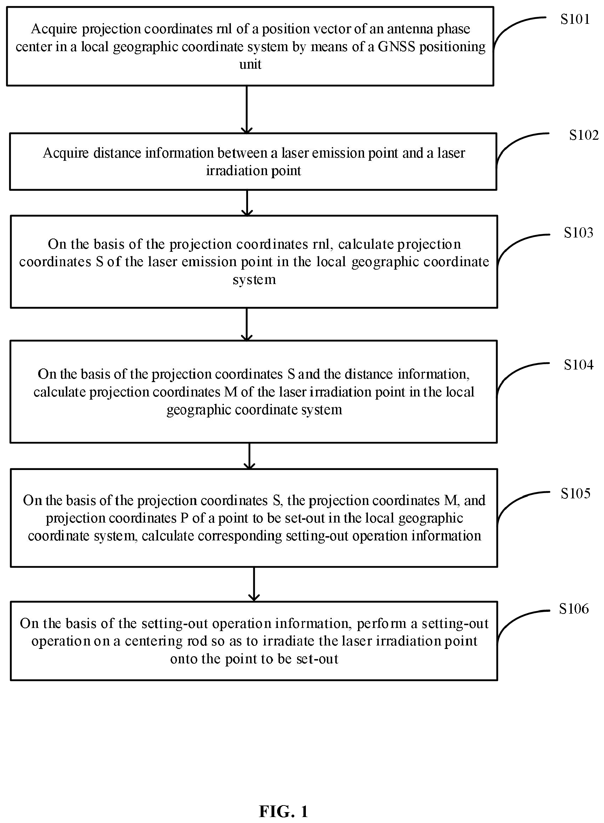

FIG. 1 is a schematic flowchart of the stakeout method provided in at least one embodiment of the present disclosure.

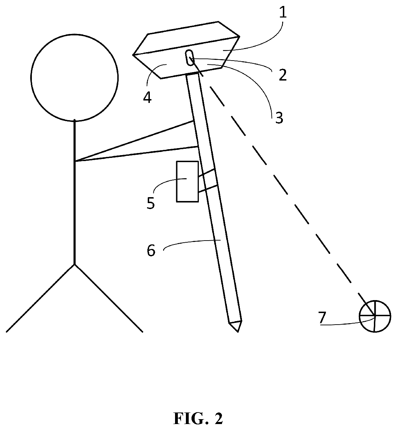

For example, the stakeout method is used for the measurement system. For example, the measurement system may be an RTK receiver. An example structure of the measurement system is shown in FIG. 2.

As shown in FIG. 2, the measurement system includes a navigation module 1, a laser distance measuring module 2, a processing module 3, a transmission module 4, an electronic field book and bracket 5, and a centering rod 6. 7 represents the point position of the point to be staked out.

The navigation module 1 mainly consists of an inertial measuring unit, a GNSS (Global Navigation Satellite System) positioning unit, and a Kalman filter. The GNSS positioning unit can obtain high-precision position information of the measurement system. The Kalman filter can fuse the position information with the angular rate and the specific force information from the inertial measuring unit to obtain high-frequency position and attitude information of the inertial measuring unit.

The laser distance measuring module 2 is installed at the front end of the measurement system and includes a single-line laser distance measuring instrument and a CPU processor. The single-line laser distance measuring instrument irradiates laser to a certain point in space. By obtaining the phase observations and processing them with the CPU, the distance information between the point and the laser emission point can be obtained.

The processing module 3 calculates the position information of the laser emission point and the laser irradiation point, and then processes the required stakeout error based on the position information and the position information of the point to be staked out.

The transmission module 4 is mainly used to obtain position information of the point to be staked out from the electronic field book 5, and to transmit the stakeout error processed by the processing module 3 to the electronic field book 5.

As shown in FIG. 1, the stakeout method includes the following steps S101 to S106.

Step S101: obtain the projection coordinate $r_I^n$ of the position vector of the antenna phase center in the first coordinate system via the GNSS positioning unit.

For example, the origin of the first coordinate system is located at the center of the inertial measuring unit. The x-axis is parallel to a local horizontal plane and pointing to geographic north. The y-axis is parallel to the local horizontal plane and pointing to geographic east. The z-axis, the x-axis and the y-axis form a right-handed coordinate system.

For example, connect the base of the measurement system to the centering rod on an open ground surface in the area to be staked out, turn on the measurement system, configure the measurement system and access differential data (for example, network differential data, which typically includes reference station coordinates, raw observation data, differential correction values, etc.), to obtain the projection coordinate of the antenna phase center.

For example, manually input the point position coordinate of the point to be staked out in the electronic field book, or select the point to be staked out from the point database, and transmit the position information of the point to be staked out to the measurement system through the transmission module, for example, via wired or wireless communication means. Obtain the position information of the tip of the centering rod through tilt compensation of the centering rod, and compare it with the position information of the point to be staked out. If the point to be staked out is located near the tip of the centering rod and can be easily reached by simple movement, the tip of the centering rod can be directly moved to poke the position of the point to be staked out, thereby completing the stakeout. If the stakeout point is located far away, or it is not convenient to move due to obstacles, turn on the laser distance measuring module and continue with steps S102 to S106.

Step S102: obtain the distance information between the laser emission point and the laser irradiation point.

For example, obtain distance information between the laser emission point and the laser irradiation point via the laser distance measuring module.

Step S103: calculate the projection coordinate S of the laser emission point in the first coordinate system based on the projection coordinate $r_I^n$.

Step S104: calculate the projection coordinate M of the laser irradiation point in the first coordinate system based on the projection coordinate S and the distance information.

Step S105: calculate the corresponding stakeout error based on the projection coordinate S, the projection coordinate M, and the projection coordinate P of the point to be staked out in the first coordinate system.

Step S106: perform the stakeout operation using the support portion according to the stakeout error so as to project the laser irradiation point onto the point to be staked out.

For example, the stakeout method provided in the present disclosure further includes: initializing the navigation module to obtain an initial value of a heading angle of the measurement system.

For example, first hold the centering rod of the measurement system, keep the measurement system stationary for several seconds to obtain the initial values of the roll angle and pitch angle of the second coordinate system relative to the first coordinate system. Then continuously shake the centering rod to obtain the initial value of the heading angle of the second coordinate system relative to the first coordinate system and to enable the Kalman filter to converge, thereby completing the initialization of the navigation module.

For example, the origin of the second coordinate system is located at the center of the inertial measuring unit. The x-axis is perpendicular to a panel of the measurement system and pointing inward. The y-axis is perpendicular to the x-axis and pointing to a right side of the measurement system. The z-axis, the x-axis and the y-axis form a right-handed coordinate system.

For example, in some embodiments of the present disclosure, Step S103 may include: obtaining the projection coordinate $l_S^b$ of the vector from the antenna phase center to the laser emission point in the second coordinate system; and calculating the projection coordinate S according to the following formula: $S = r_I^n + C_b^n l_S^b$. Here, $C_b^n$ represents a coordinate transformation matrix from the first coordinate system to the second coordinate system.

For example, the projection coordinate $l_S^b$ can be obtained by actual measurement with a ruler or from the structural design drawings of the measurement system.

For example, in some embodiments of the present disclosure, Step S104 may include: based on the distance information, calculating the projection coordinate $P_M^b$ of the laser irradiation point in the second coordinate system according to the following formula: $P_M^b = T_L^b P_M^L$, and calculating the projection coordinate M according to the following formula:

Here, $T_L^b$ represents the spatial position relationship between the second coordinate system and the laser coordinate system, and $C_b^n$ represents the coordinate transformation matrix from the first coordinate system to the second coordinate system.

For example, the origin of the laser coordinate system is the laser emission point. The y-axis of the laser coordinate system is the projection of the coordinate vector from the laser emission point to the laser irradiation point onto the local horizontal plane. The x-axis and the y-axis form a right-handed coordinate system.

For example, $T_L^b$ includes the rotation relationship and the translation relationship, which can be obtained from the structural design drawings of the measurement system.

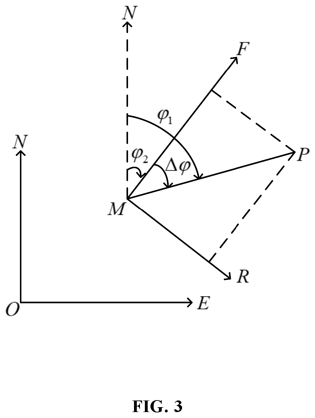

FIG. 3 shows a schematic diagram of laser stakeout.

As shown in FIG. 3, M and P are the projection coordinates described above, and the MF direction represents the user viewing direction, which can also represent the laser ray direction. F-M-R represents the user perspective coordinate system established with the laser irradiation point as the origin. The coordinate axis M-F coincides with the positive direction of the user viewing direction. The coordinate axis M-R is perpendicular to M-F to form a right-handed coordinate system, and the stakeout error and stakeout operation expressed in the user perspective coordinate system are more intuitive.

Two methods for calculating the stakeout error are described below with reference to FIG. 3.

The first method for calculating the stakeout error:

For example, in some embodiments of the present disclosure, the stakeout error includes the first stakeout error and the second stakeout error. The step S105 may include the following steps S301 to S303.

Step S301: calculate the heading angle φ1 of the vector *MP* based on the projection coordinate M and the projection coordinate P.

For example, the heading angle φ1 can be calculated according to the following formula:

$$\varphi_1 = arctan2\left(\frac{P_E - M_E}{P_N - M_N}\right).$$

Here, arctan2() represents the arctangent function. The angle rotated counterclockwise from geographic north is defined as the positive angle, and the angle rotated clockwise from geographic north is defined as the negative angle. The subscript E represents the east coordinate component in the first coordinate system. The subscript N represents the north coordinate component in the first coordinate system.

Step S302: calculate the heading angle φ2 of the laser ray direction based on the projection coordinate S and the projection coordinate M.

For example, the heading angle φ2 can be calculated according to the following formula:

$$\varphi_2 = arctan2\left(\frac{M_E - S_E}{M_N - S_N}\right).$$

Step S303: calculate the first stakeout error and the second stakeout error based on the heading angle φ1 and the heading angle φ2 in the user perspective coordinate system.

For example, the first stakeout error and the second stakeout error can be calculated according to the following formula:

$$\Delta F = \overrightarrow{MP} \cdot cos\left(\varphi_1 - \varphi_2\right)$$

$$\Delta R = \overrightarrow{MP} \cdot sin\left(\varphi_1 - \varphi_2\right)$$

The user can move the measurement system according to the first stakeout error and the second stakeout error described above, thereby moving the laser irradiation point to complete the stakeout.

The second method for calculating the stakeout error:

For example, in some embodiments of the present disclosure, the stakeout error includes the rotation angle and the shake angle of the measurement system. The step S105 may include the following steps S311 to S314.

Calculate the heading angle φ1 of the vector *MP* based on the projection coordinate M and the projection coordinate P; Calculate the heading angle φ2 of the laser ray direction based on the projection coordinate S and the projection coordinate M; Calculate the rotation angle of the measurement system according to the following formula: $\Delta\varphi = \varphi_1 - \varphi_2$; Calculate the included angle $\alpha_1$ between the projection coordinate P and a horizontal plane of the first coordinate system; Calculate the included angle $\alpha_2$ between the projection coordinate M and the horizontal plane of the first coordinate system; Calculate the shake angle of the measurement system according to the following formula: $\Delta\alpha = \alpha_1 - \alpha_2$.

Step S311: calculate the heading angle φ1 of the vector *MP* based on the projection coordinate M and the projection coordinate P; calculate the heading angle φ2 of the laser ray direction based on the projection coordinate S and the projection coordinate M.

The heading angle φ1 of the vector $\overrightarrow{MP}$ and the heading angle φ2 of the laser ray direction can be calculated with reference to the above steps S301 and S302, and will not be repeated here.

Step S312: Determine the direction and angle by which the measurement system needs to be rotated according to the following formula: $\Delta\varphi = \varphi_1 - \varphi_2$, thereby causing the user viewing direction projected on the local horizontal plane to coincide with the coordinate vector $\overrightarrow{MP}$.

Here, the sign of Δφ represents the direction of the rotation angle. The positive value indicates counterclockwise rotation. The negative value indicates clockwise rotation. The absolute value of Δφ represents the specific angle that needs to be rotated. In particular, when the absolute value of Δφ is greater than π, the angle of rotation needs to be converted to the opposite direction for operational simplicity.

Step S313: calculate the included angle $\alpha_1$ between the projection coordinate P and a horizontal plane of the first coordinate system; calculate the included angle $\alpha_2$ between the projection coordinate M and the horizontal plane of the first coordinate system.

For example, the included angle $\alpha_1$ can be calculated according to the following formula:

$$\alpha_1 = arctan\left(P_U, \sqrt{P_E{}^2 + P_N{}^2}\right).$$ For example, the included angle $\alpha_2$ can be calculated according to the

following formula: $\alpha_2 = arctan\left( M_U, \sqrt{M_E{}^2 + M_N{}^2} \right)$ .

Here, the subscript U represents the elevation coordinate component in the first coordinate system. The value range of the included angle $\alpha1$ and the included angle $\alpha2$ is $(-\pi/2, \pi/2)$. Here, the direction toward the U-axis is defined as positive, and the opposite direction as negative.

Step S314: calculate the shake angle of the measurement system according to the following formula: $\Delta\alpha = \alpha_1 - \alpha_2$.

Here, the sign of $\Delta\alpha$ represents the direction of forward or backward shaking of the centering rod. The positive value indicates shaking backward in the direction the user is facing. The negative value indicates shaking forward in the direction the user is facing. The absolute value of $\Delta\alpha$ represents the specific angle of forward-backward shaking.

For example, after obtaining the stakeout error through step S105, the above stakeout error is transmitted to the electronic field book via the transmission module and displayed in real time. The user performs the stakeout operation by rotating and forward or backward shaking the centering rod according to the stakeout error, or by moving the laser irradiation point according to the first stakeout error and the second stakeout error in the user perspective coordinate system. During the process, the coordinate difference between the laser irradiation point and the point to be staked out in the first coordinate system is continuously compared. If the difference satisfies the precision required for stakeout, the user can be reminded of successful stakeout through means such as voice or vibration. By combining the centering rod with the laser distance measuring module, long-distance stakeout can be achieved while preventing shaking during the stakeout process by stabilizing the centering rod. Furthermore, the stakeout procedure is simplified. The laser irradiation point can be moved to quickly locate the point to be staked out merely by rotating and forward or backward shaking the centering rod at the current position.

It should be noted that, in the embodiment, calculating the position of the laser irradiation point based on the antenna phase center is a preferred embodiment. In the measurement system, since the position of any one component is known, the positions of the remaining components can all be determined.

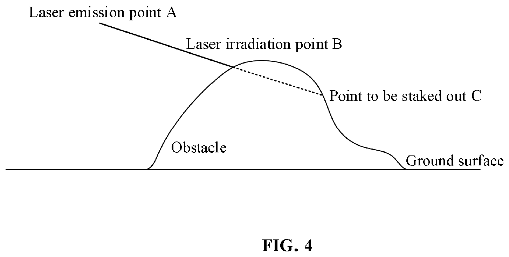

For example, the stakeout method provided in the embodiments of the present disclosure further includes: prompting the measurement operator to move to another side of an obstacle to perform a stakeout operation in the case where the obstacle blocks during the stakeout process, as shown in FIG. 4.

In FIG. 4, the centering rod is adjusted to the appropriate state. The laser emission point A of the laser distance measuring module emits laser light. Under normal circumstances, the laser irradiates onto the point to be staked out C to complete the stakeout. However, due to obstruction by the obstacle (for example, sand dunes, rocks, etc.), the laser irradiates onto the obstacle, and the actual laser irradiation point is the laser irradiation point B instead of the point to be staked out C. At this time, the coordinate difference in the geographic coordinate system cannot satisfy the requirement of being less than the stakeout precision. In the event of the above situation, the measurement system can prompt the measurement operator to move to the other side of the obstacle to perform the stakeout operation.

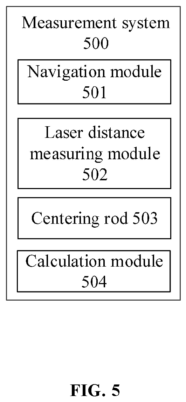

FIG. 5 illustrates the measurement system 500 provided in at least one embodiment of the present disclosure. The measurement system 500 can be used to implement the stakeout method shown in FIG. 1.

As shown in FIG. 5, the measurement system 500 may include a navigation module 501, a laser distance measuring module 502, a centering rod 503, and a calculation module 504.

The calculation module 504 is configured to calculate the projection coordinate S of the laser emission point in the first coordinate system based on the projection coordinate $r_I^n$ and the distance information; calculate the projection coordinate M of the laser irradiation point in the first coordinate system based on the projection coordinate S and the distance information; and calculate the corresponding stakeout error based on the projection coordinate S, the projection coordinate M, and the projection coordinate P of the point to be staked out in the first coordinate system.

For example, the measurement system 500 may be implemented by hardware, software, firmware, or any feasible combination thereof. The present disclosure is not limited thereto.

The functions of each module in the measurement system 500 can be implemented using the specific implementation manners corresponding to the steps in the stakeout method described above, and will not be repeated here.

The technical effects of the measurement system 500 are the same as those of the stakeout method described above, and will not be repeated here.

At least one embodiment of the present disclosure further provides a computer-readable medium storing executable instructions. When the instructions are executed by one or more processors, the following steps of the method according to at least one embodiment of the present disclosure are performed: calculating the projection coordinate S of the laser emission point in the first coordinate system based on the projection coordinate $r_I^n$ ; calculating the projection coordinate M of the laser irradiation point in the first coordinate system based on the projection coordinate S and the distance information; and calculating the corresponding stakeout error based on the projection coordinate S, the projection coordinate M, and the projection coordinate P of the point to be staked out in the first coordinate system.

Several points below need to be explained:

(1) The drawings of the embodiments of the present disclosure relate only to the structures involved in the embodiments of the present disclosure, and normal designs may be referred to for other structures.
(2) In case of no conflict, the embodiments of the present disclosure and the features in the embodiments may be combined with each other to obtain a new embodiment.

The above are only specific embodiments of the present disclosure, but the scope of the embodiment of the present disclosure is not limited thereto, and the scope of the present disclosure should be the scope of the following claims.

**Claims**

1. A stakeout method for a measurement system, wherein the measurement system comprises a navigation module, a laser distance measuring module, and a support portion, wherein the stakeout method comprises:

obtaining a coordinate P of a point to be staked out in a first coordinate system;
obtaining a first coordinate of the navigation module in the first coordinate system by the navigation module;
obtaining distance information between a laser emission point and a laser irradiation point by the laser distance measuring module;
obtaining first vector information between the navigation module and the laser emission point;
obtaining a second coordinate of the laser irradiation point in the first coordinate system based on the first coordinate, the first vector information and the distance information;
obtaining a corresponding stakeout error based on the coordinate P and the second coordinate;
adjusting the support portion according to the stakeout error to project the laser irradiation point onto the point to be staked out.

2. The stakeout method according to claim 1, wherein the navigation module comprises an inertial measuring unit and a GNSS positioning unit,
the step of obtaining the first coordinate of the navigation module in the first coordinate system by the navigation module comprises:

obtaining a projection coordinate $r_I^n$ of an antenna phase center as the first coordinate in the first coordinate system via the GNSS positioning unit;
the step of obtaining the second coordinate of the laser irradiation point in the first coordinate system based on the first coordinate, the first vector information and the distance information comprises:

calculating a projection coordinate S of the laser emission point in the first coordinate system based on the projection coordinate $r_I^n$ and the first vector information;
calculating the second coordinate M based on the projection coordinate S and the distance information.

3. The stakeout method according to claim 1, wherein the stakeout method further comprises:
initializing the navigation module to obtain an initial value of the measurement system.

4. The stakeout method according to claim 2, wherein the step of calculating a projection coordinate S of the laser emission point in the first coordinate system based on the projection coordinate $r_I^n$ and the first vector information comprises:

obtaining a projection coordinate $l_S^b$ of a vector from the antenna phase center to the laser emission point as the first vector information in a second coordinate system;
calculating the projection coordinate S according to the following formula: $S = r_I^n + C_b^n l_S^b$, wherein $C_b^n$ represents a coordinate transformation matrix from the first coordinate system to the second coordinate system;
wherein an origin of the first coordinate system is located at a center of the inertial measuring unit, an x-axis is parallel to a local horizontal plane and pointing to geographic north, a y-axis is parallel to the local horizontal plane and pointing to geographic east, and a z-axis, the x-axis and the y-axis form a right-handed coordinate system; an origin of the second coordinate system is located at the center of the inertial measuring unit, an x-axis is perpendicular to a panel of the measurement system and pointing inward, a y-axis is perpendicular to the x-axis and pointing to a right side of the measurement system, and the z-axis, the x-axis and the y-axis form a right-handed coordinate system.

5. The stakeout method according to claim 4, wherein the step of calculating the second coordinate M of the laser irradiation point in the first coordinate system based on the projection coordinate S and the distance information comprises:

based on the distance information, calculating a projection coordinate $P_M^b$ of the laser irradiation point as the second coordinate in the second coordinate system according to the following formula: $P_M^b = T_L^b P_M^L$, wherein $P_M^L$ represents a projection coordinate of the laser irradiation point in a laser coordinate system, and $T_L^b$ represents a spatial position relationship between the second coordinate system and the laser coordinate system;

wherein an origin of the laser coordinate system is the laser emission point, a y-axis of the laser coordinate system is a projection of a coordinate vector from the laser emission point to the laser irradiation point onto the local horizontal plane, and an x-axis and the y-axis form a right-handed coordinate system;

calculating the projection coordinate M according to the following formula: $M = S + C_b^n P_M^b$, wherein $C_b^n$ represents the coordinate transformation matrix from the first coordinate system to the second coordinate system.

6. The stakeout method according to claim 2, wherein the stakeout error comprises a first stakeout error and a second stakeout error, and the step of obtaining the corresponding stakeout error based on the coordinate P and the second coordinate comprises:

calculating a heading angle φ1 of a vector $\overrightarrow{MP}$ based on the second coordinate M and the coordinate P;
calculating a heading angle φ2 of a laser ray direction based on the projection coordinate S and the second coordinate M;
establishing a user perspective coordinate system, and calculating the first stakeout error and the second stakeout error based on the heading angle φ1 and the heading angle φ2 in the user perspective coordinate system, wherein an origin of the user perspective coordinate system is the laser irradiation point, an x-axis whose positive direction coincides with the laser ray direction, and a y-axis perpendicular to the x-axis to form a right-handed coordinate system.

7. The stakeout method according to claim 2, wherein the stakeout error comprises a rotation angle and a shake angle of the measurement system, and the step of obtaining the corresponding stakeout error based on the coordinate P and the second coordinate comprises:

calculating a heading angle φ1 of a vector $\overrightarrow{MP}$ based on the second coordinate M and the coordinate P;
calculating a heading angle φ2 of a laser ray direction based on the projection coordinate S and the second coordinate M;
calculating the rotation angle of the measurement system according to the following formula: $\Delta\varphi = \varphi_1 - \varphi_2$;
calculating an included angle $\alpha_1$ between the coordinate P and a horizontal plane of the first coordinate system;
calculating an included angle $\alpha_2$ between the second coordinate M and the horizontal plane of the first coordinate system;
calculating the shake angle of the measurement system according to the following formula: $\Delta\alpha = \alpha_1 - \alpha_2$.

8. The stakeout method according to claim 6 or 7, wherein the step of calculating the heading angle φ1 of the vector $\overrightarrow{MP}$ based on the second coordinate M and the coordinate P comprises:

calculating the heading angle φ1 according to the following formula:

$$\varphi_1 = arctan2\left(\frac{P_E - M_E}{P_N - M_N}\right);$$

the step of calculating the heading angle φ2 of the laser ray direction based on the projection coordinate S and the second coordinate M comprises:

calculating the heading angle φ2 according to the following formula:

$$\varphi_2 = arctan2\left(\frac{M_E - S_E}{M_N - S_N}\right);$$

wherein a subscript E represents an east component in the first coordinate system, and a subscript N represents a north component in the first coordinate system.

9.  The stakeout method according to claim 6, wherein the step of calculating the first stakeout error and the second stakeout error in the user perspective coordinate system comprises:

calculating the first stakeout error according to the following formula:

$$\Delta F = \overrightarrow{MP} \cdot cos\left(\varphi_1 - \varphi_2\right);$$

calculating the second stakeout error according to the following formula:

$$\Delta R = \overrightarrow{MP} \cdot sin\left(\varphi_1 - \varphi_2\right).$$

10. The stakeout method according to claim 7, wherein,
    the step of calculating the included angle $\alpha_1$ between the coordinate P and a horizontal plane of the first coordinate system comprises:

calculating the included angle $\alpha_1$ according to the following formula:

$$\alpha_1 = arctan\left(P_U, \sqrt{P_E^{\,2} + P_N^{\,2}}\right);$$

the step of calculating an included angle $\alpha_2$ between the second coordinate M and the horizontal plane of the first coordinate system comprises:

calculating the included angle $\alpha_2$ according to the following formula:

$$\alpha_2 = arctan\left(M_U, \sqrt{M_E^{\,2} + M_N^{\,2}}\right);$$

wherein a subscript E represents an east component in the first coordinate system, a subscript N represents a north component in the first coordinate system, and a subscript U represents an elevation coordinate component in the first coordinate system.

11. The stakeout method according to claim 1, wherein the stakeout method further comprises:
    prompting a measurement operator to move to another side of an obstacle to perform a stakeout operation in a case where the obstacle blocks during a stakeout process.

12. A measurement system configured to implement a stakeout method according to any one of claims 1 to 11, wherein the measurement system comprises a navigation module, a laser distance measuring module, a support portion, and a calculation module, wherein the calculation module is configured to obtain a coordinate P of a point to be staked out in a first coordinate system; obtain a first coordinate of the navigation module in the first coordinate system by the navigation module; obtain distance information between a laser emission point and a laser irradiation point by the laser distance measuring module; obtain first vector information between the navigation module and the laser emission point; obtain a second coordinate of the laser irradiation point in the first coordinate system based on the first coordinate, the first vector information and the distance information; and obtain a corresponding stakeout error based on the coordinate P and the second coordinate.

13. A computer-readable medium storing executable instructions, wherein, when the instructions are executed by one or more processors, the following steps of the method according to any one of claims 1 to 11 are performed:

obtaining a coordinate P of a point to be staked out in a first coordinate system;
obtaining a first coordinate of the navigation module in the first coordinate system by the navigation module;
obtaining distance information between a laser emission point and a laser irradiation point by the laser distance measuring module;
obtaining first vector information between the navigation module and the laser emission point;
obtaining a second coordinate of the laser irradiation point in the first coordinate system based on the first coordinate, the first vector information and the distance information;
obtaining a corresponding stakeout error based on the coordinate P and the second coordinate.

Acquire projection coordinates rnl of a position vector of an antenna phase center in a local geographic coordinate system by means of a GNSS positioning unit
— S101

Acquire distance information between a laser emission point and a laser irradiation point
— S102

On the basis of the projection coordinates rnl, calculate projection coordinates S of the laser emission point in the local geographic coordinate system
— S103

On the basis of the projection coordinates S and the distance information, calculate projection coordinates M of the laser irradiation point in the local geographic coordinate system
— S104

On the basis of the projection coordinates S, the projection coordinates M, and projection coordinates P of a point to be set-out in the local geographic coordinate system, calculate corresponding setting-out operation information
— S105

On the basis of the setting-out operation information, perform a setting-out operation on a centering rod so as to irradiate the laser irradiation point onto the point to be set-out
— S106

**FIG. 1**

**FIG. 2**

**FIG. 3**

Laser emission point A

Laser irradiation point B

Point to be staked out C

Obstacle

Ground surface

**FIG. 4**

Measurement system
500

Navigation module
501

Laser distance
measuring module
502

Centering rod 503

Calculation module
504

**FIG. 5**

## INTERNATIONAL SEARCH REPORT

| International application No. |
|---|
| **PCT/CN2023/125175** |

**A.    CLASSIFICATION OF SUBJECT MATTER**

G01C15/00(2006.01)i;  G01C15/08(2006.01)i;  G01S19/47(2010.01)i;  G01B11/00(2006.01)i;  G01S19/43(2010.01)i

According to International Patent Classification (IPC) or to both national classification and IPC

**B.    FIELDS SEARCHED**

Minimum documentation searched (classification system followed by classification symbols)

    IPC:  G01C G01S G01B

Documentation searched other than minimum documentation to the extent that such documents are included in the fields searched

Electronic data base consulted during the international search (name of data base and, where practicable, search terms used)

    CNABS; CNTXT; VEN; ENTXT; ENTXTC; CNKI: 放样, 放线, 导航, 北斗, 定位, 激光, 测距, 距离, 误差, 偏差, 航向, 偏航, 旋转, 摇晃, 滚动, 横滚, 横摇, 纵摇, 俯仰, 角, 坐标, 转换, lofting, navigat+, positioning, laser+, distance, measur+, error +, angle+, yaw+, roll+, pitch+

**C.    DOCUMENTS CONSIDERED TO BE RELEVANT**

| Category* | Citation of document, with indication, where appropriate, of the relevant passages | Relevant to claim No. |
|---|---|---|
| Y | CN 112964252 A (SHANGHAI JINGRONG NETWORK TECHNOLOGY CO., LTD.) 15 June 2021 (2021-06-15)<br>    description, paragraphs [0036]-[0078], and figures 1-5 | 1-13 |
| Y | CN 111962338 A (CHINA RAILWAY SIYUAN SURVEY AND DESIGN GROUP CO., LTD.) 20 November 2020 (2020-11-20)<br>    description, paragraphs [0028]-[0049], and figures 1 and 2 | 1-13 |
| Y | CN 106092094 A (HOHAI UNIVERSITY et al.) 09 November 2016 (2016-11-09)<br>    description, paragraphs [0003]-[0037] and [0046]-[0084], and figures 1-6 | 5, 12, 13 |
| A | CN 113514865 A (COMNAV TECHNOLOGY LTD.) 19 October 2021 (2021-10-19)<br>    entire document | 1-13 |
| A | CN 106546229 A (CHINA GEZHOUBA GROUP NO.1 ENGINEERING CO., LTD.) 29 March 2017 (2017-03-29)<br>    entire document | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **11 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/125175**

| Patent document cited in search report | | | Publication date (day/month/year) | Patent family member(s) | Publication date (day/month/year) |
|---|---|---|---|---|---|
| CN | 112964252 | A | 15 June 2021 | None | |
| CN | 111962338 | A | 20 November 2020 | None | |
| CN | 106092094 | A | 09 November 2016 | None | |
| CN | 113514865 | A | 19 October 2021 | None | |
| CN | 106546229 | A | 29 March 2017 | None | |

Form PCT/ISA/210 (patent family annex) (July 2022)